Europäisches Patentamt

European Patent Office

Office européen des brevets

(19)

(11) Veröffentlichungsnummer: **0 133 855**
**B1**

(12) **EUROPÄISCHE PATENTSCHRIFT**

(45) Veröffentlichungstag der Patentschrift:
**27.01.88**

(51) Int. Cl.⁴: **F 16 L  9/14**

(21) Anmeldenummer: **83201179.5**

(22) Anmeldetag: **11.08.83**

(54) Betonummantelung für Pipelines sowie Verfahren zur Herstellung der Betonummantelung.

(43) Veröffentlichungstag der Anmeldung:
**13.03.85 Patentblatt 85/11**

(45) Bekanntmachung des Hinweises auf die Patenterteilung:
**27.01.88 Patentblatt 88/4**

(84) Benannte Vertragsstaaten:
**AT DE FR GB NL**

(56) Entgegenhaltungen:
**CH - A - 323 096**
**DE - A - 2 214 155**
**US - A - 3 574 356**
**US - A - 3 742 985**

(73) Patentinhaber: **Pipeline-Coating GmbH,
D-4100 Duisburg 1 (DE)**

(72) Erfinder: **König, Rainer, Mercatorstrasse 114,
D-4100 Duisburg 1 (DE)**

(74) Vertreter: **Ackmann, Günther, Dr.-Ing.,
Claubergstrasse 24 Postfach 10 09 22,
D-4100 Duisburg 1 (DE)**

## Beschreibung

Die Erfindung bezieht sich auf eine Betonummantelung für Pipelines mit einer vor der Betonerhärtung vorgespannten Bewehrung aus Kunststoffseilen und/oder Kunststoffmatten sowie auf ein Verfahren zur Herstellung der Betonummantelung.

Aus der DE-A3-2 214 155 ist eine mit einer vorgespannten Bewehrung aus Kunststoffseilen versehene Betonummantelung für Pipelines bekannt, zu deren Herstellung um das auf schalenförmigen, aus Beton bestehenden Stützlagern abgestützte Pipeline-Rohr Kunststoffseile und/oder Kunststoffmatten gelegt werden, deren durch Kanäle in den Stützlagern geführte Enden vorgespannt werden, worauf der bewehrte Rohrabschnitt verschalt und betoniert wird. Häufig werden auch zusätzlich schmale und mit Führungskanälen für die Kunststoffseile versehene Montageringe verwendet. Eine solche Betonummantelung mit einer vorgespannten Bewehrung aus Kunststoffseilen bzw. -matten dient als Ballast und dem Schutze des Pipeline-Rohres und hat sich in der Praxis bei der Verlegung von Dükern unter Flussbetten o. dgl. bewährt, wobei der am Ufer in seiner Gesamtlänge fertiggestellte Rohrstrang entweder mit Hilfe von Hubvorrichtungen über den Fluss gefahren und dann in einen vorbereiteten Graben im Flussbett abgesenkt oder mit Hilfe von Seilzügen durch den Graben zum anderen Ufer gezogen wird. Um Beschädigungen des verlegten Rohrstranges durch Ankerwerfen o. dgl. zu verhindern, wird er in einem relativ tiefen Graben verlegt, der anschliessend wieder mit Kies- und Gesteinsmaterial verfüllt wird. Mit dem betonummantelten und als Produktenrohr dienenden Rohrstrang werden in der Regel ein oder mehrere Kabelrohre gleichzeitig verlegt. Diese Kabelrohre finden meist zur Verlegung von Kontroll- und Steuerleitung, die der Produktenförderung zugeordnet sind, Verwendung, oder stehen beispielsweise als Postrohre o. dgl. zur Verfügung. Für diesen Zweck wurden bisher als Kabelrohre dienende Stahlrohre und der als Produktenrohr dienende Rohrstrang mit Hilfe von Stahlschellen, Gurten o. dgl. nebeneinander an Traversen befestigt. Nach dem Verlegen in den Dükergraben wurden diese Stahlrohre ebenfalls mit dem der Verfüllung dienenden Kies- und Gesteinsmaterial abgedeckt. Das Verfüllen des Dükergrabens führte jedoch häufig zu einer mechanischen Beschädigung der Kabelrohre, so dass diese häufig wieder ausgehoben und durch neue ersetzt werden mussten. Die meist aus Stahl bestehenden Kabelrohre haben weiterhin den Nachteil, dass sie den wichtigen Kathodenschutz des Produktenrohres beeinträchtigen können. Die Verwendung von Kunststoffrohren als Kabelrohre scheidet jedoch wegen der grossen Zerstörungsgefahr bei der Rückverfüllung des Dükergrabens aus.

Andererseits ist aus der US-A-3 574 356 ein vorgefertigter Kabelformstein mit eingegossenen Rohren zum Durchführen von Erdkabel o. dgl. bekannt, der mit einer Stahlarmierung versehen ist.

Diese Kabelformsteine werden hintereinander verlegt und mit eingebauten Zugstangen Stoss an Stoss verspannt, wobei die Rohre durch Zwischenmuffen überbrückt werden. Eine solche Ausführung ist jedoch nicht für eine Betonummantelung von Pipelines geeignet, die in grossen Längen vorgefertigt wird und beim Verlegen bzw. Einziehen in das Flussbett o. dgl. sehr grosse Biegespannungen aufnehmen muss.

Ausgehend von diesem Stand der Technik liegt der Erfindung die Aufgabe zugrunde, eine vereinfachte Verlegung einer aus einem Produktenrohr und ein oder mehreren Kabelrohren bestehenden Pipeline zu ermöglichen, wobei eine Zerstörung des oder der Kabelrohre bei der Rückverfüllung des Dükergrabens vermieden werden soll.

Diese Aufgabe wird erfindungsgemäss dadurch gelöst, dass in der Betonummantelung ein oder mehrere biegsame Kunststoffrohre für Kabel o. dgl. eingebettet sind.

In vorteilhafter Weise sind die als Kabelrohre dienenden Kunststoffrohre intergrierter Bestandteil des betonummantelten Produktenrohres. Eine separate Anordnung der Kabelrohre und deren Anbindung durch Schellen und Traversen ist daher nicht mehr erforderlich. Hierdurch wird die Verlegearbeit wesentlich erleichtert. Die biegsamen Kunststoffrohre sind auch geeignet, die beim Einziehen der Pipeline in den Dükergraben auftretenden grossen Biegebeanspruchungen aufzunehmen. Beim Verfüllen des Dükergrabens liegen die Kunststoffrohre geschützt im Betonmantel, so dass Zerstörungen praktisch ausgeschlossen sind. Weiterhin wird der Kathodenschutz durch die Kunststoffrohre nicht beeinträchtigt. Da die Kunststoffrohre in aufgewickelten grossen Längen erhältlich sind, ist eine wesentlich einfachere Verarbeitung als bei Stahlrohren möglich, die nur in kurzen Längen angeliefert werden und verschweisst werden müssen.

Die Herstellung der Baueinheit aus Produktenrohr, Kunststoffrohren und Betonummantelung geschieht nach der aus der DE-A3-2 214 155 bekannten Verfahrensweise, wobei jedoch zusätzlich zwischen den Stützlagern ein oder mehrere Kunststoffrohre angeordnet und einbetoniert werden. Dabei können das oder die Kunststoffrohre in Ausschnitte der Stützlager eingelegt werden, die beim anschliessenden Betonieren der Betonummantelung mit Betonmasse gefüllt werden. Bei Pipelines, die mittels Hubvorrichtungen in das Flussbett abgesenkt werden und bei denen keine grösseren Biegebeanspruchungen beim Verlegen auftreten, können die Kunststoffrohre im oberen Bereich der Betonummantelung angeordnet sein. Soll die Pipeline jedoch in den Dükergraben eingezogen werden und sind grosse Biegebeanspruchungen aufzunehmen, werden die Kunststoffrohre zweckmässig an den Seiten angeordnet, wo sich die neutrale Zone befindet.

Zwei Ausführungsbeispiele der Erfindung sind in der Zeichnung erläutert; es zeigt:

Fig. 1 einen Pipeline-Rohrabschnitt in seitlicher Ansicht mit zwei Stützlagern, zugeordneter Bewehrung und zwei seitlich angeordneten Kunststoffrohren,

Fig. 2 eines der in Fig. 1 dargestellten Stützlager in einer perspektivischen Darstellung,

Fig. 3 einen der in Fig. 1 dargestellten Montageringe in einer perspektivischen Darstellung,

Fig. 4 ein Stützlager in einer perspektivischen Darstellung für zwei im oberen Bereich angeordnete Kunststoffrohe und

Fig. 5 einen Pipeline-Rohrabschnitt in seitlicher Ansicht mit dem in Fig. 4 dargestellten Stützlager.

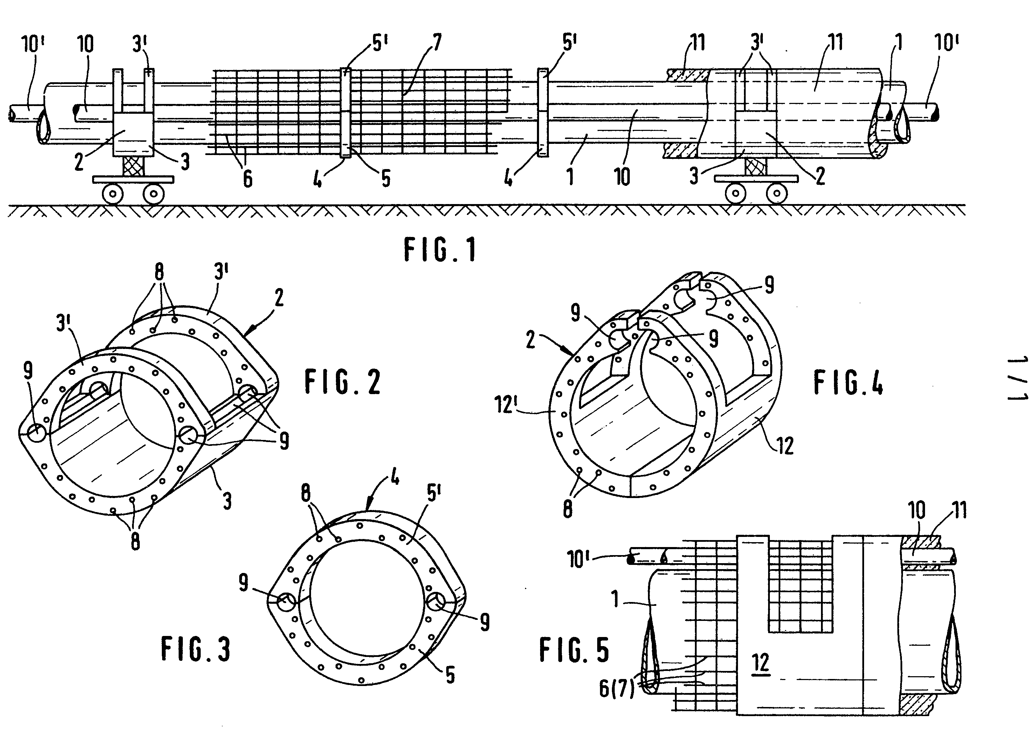

Die in den Fig. 1 bis 3 dargestellte Ausführung ist für einen durch Seilzug in ein Flussbett einzuziehenden Düker geeignet. Das zu ummantelnde Pipeline-Rohr 1 besteht in der Regel aus einem am Aussenmantel mit Kunststoff beschichteten Stahlrohr und dient nach der Verlegung als Produktenrohr. Zur Herstellung einer Betonummantelung wird das Pipeline-Rohr 1 zunächst mit Hilfe von zwei oder mehreren mit Abstand zueinander aufgestellten Stützlagern 2 gelagert. Diese bestehen aus zwei aus Beton vorgefertigten Lagerschalen 3,3', die um das Pipeline-Rohr 1 gelegt werden und der Lagerfixierung der Bewehrung dienen. Zwischen den Stützlagern 2, die in der Praxis einen Abstand von etwa 5 bis 10 m haben, können bedarfsweise Montageringe 4 angeordnet sein, welche aus zwei Hälften 5,5' bestehen und ein gleiches Querschnittprofil wie die Stützlager 2 aufweisen, jedoch in bezug auf die Längsachse nur etwa 8 bis 10 cm lang sind, während die Länge der Stützlager etwa 50 cm beträgt. Sowohl in den Stützlagern 2 wie auch in den Montageringen 4 sind koaxiale Führungskanäle 8 für eine Bewehrung aus Kunststoffseilen 6 und/oder Kunststoffmatten 7 vorgesehen, welche in axialer Richtung mit Hilfe von Verankerungen und eine Spannvorrichtung vorgespannt werden (nicht dargestellt). Ausserdem sind in den Stützlagern 2 und Montageringen 4 Ausschnitte 9 vorhanden, die auf jeder Seite ein als Kabelrohr dienendes Kunststoffrohr 10,10' aufnehmen können. In jeden Ausschnitt 9 wird ein Kunststoffrohr 10,10' für Kabel o. dgl. eingelegt und lagegerecht fixiert. Die Kunststoffrohre 10,10' können beispielsweise aus Polyäthylen oder einem anderen geeigneten Kunststoff bestehen und sollen eine gewisse Biegsamkeit haben. Anschliessend wird der mit den Kunststoffrohren 10,10' und der Bewehrung ausgerüstete Rohrabschnitt zwischen den Stützlagern 2 verschalt und betoniert, wobei auch die Ausschnitte 9 mit Betonmasse gefüllt werden. Kommt es beim Einziehen des ummantelten Rohrstranges zu Biegebeanspruchungen, wirkt sich dies nicht schädlich auf die in der neutralen Zone liegenden Kunststoffrohre 10,10' aus. Die fertige Betonummantelung 11 wird von den Stützlagern 2 mit ihren Ausschnitten 9, den entsprechenden schmaleren Montageringen 4 und dem zwischen diesen Bauteilen eingebrachten Beton gebildet.

Das in den Fig. 4 und 5 dargestellte Ausführungsbeispiel ist für ein Verlegen eines Rohrstranges mittels Hubvorrichtungen und durch Absenken bestimmt, bei dem keine wesentlichen Biegebeanspruchungen auftreten. Daher können die Kunststoffrohre 10,10' hier am Scheitel des Pipelinerohres 1 bzw. im oberen Bereich der Betonummantelung 11 eingebettet werden. Das Stützlager 2 ist vertikal in zwei Lagerschalen 12,12' unterteilt. Zum Anlegen der beiden Lagerschalen 12,12' können diese zunächst im oberen Bereich durch Querseile (nicht dargestellt) verbunden sein, die ein scharnierartiges Umlegen erlauben. Beide Hälften haben einen oberen Ausschnitt 9, in den die Kunststoffrohre 10,10' eingelegt und fixiert werden. Im Ausschnitt 9 können weiterhin Bewehrungselemente aus Kunststoffseilen 6 angeordnet werden, wie dies auch bei der Ausführung nach den Fig. 1 und 2 der Fall ist. Die Anordnung der vorgespannten Bewehrung aus Kunststoffseilen 6 und/oder Kunststoffmatten 7, die Verschalung und Betonierung geschieht in der gleichen Weise, wie es im Zusammenhang mit den Fig. 1 und 2 beschrieben ist. Auch können zwischen den Stützlagern 2 entsprechend profilierte Montageringe angebracht werden.

## Patentansprüche

1. Betonummantelung (11) für Pipelines mit einer vor der Betonerhärtung vorgespannten Bewehrung aus Kunststoffseilen (6) und/oder Kunststoffmatten (7), dadurch gekennzeichnet, dass in der Betonummantelung (11) ein oder mehrere biegsame Kunststoffrohre (10,10') für Kabel o. dgl. eingebettet sind.

2. Verfahren zur Herstellung einer Betonummantelung nach Anspruch 1, wobei um das auf schalenförmigen Stützlagern (2) abgestützte Pipeline-Rohr (1) Kunststoffseile (6) und/oder Kunststoffmatten (7) gelegt werden, deren durch Kanäle in den Stützlagern (2) geführte Enden vorgespannt werden, worauf der bewehrte Rohrabschnitt verschalt und betoniert wird, dadurch gekennzeichnet, dass zwischen den Stützlagern (2) ein oder mehrere biegsame Kunststoffrohre (10,10') angeordnet und einbetoniert werden.

3. Verfahren nach Anspruch 2, dadurch gekennzeichnet, dass das oder die Kunststoffrohre (10,10') in Ausschnitte (9) der Stützlager (2) eingelegt werden und der oder die Ausschnitte (9) beim Betonieren der Betonummantelung (11) mit Betonmasse gefüllt werden.

## Revendications

1. Gaine en béton (11) de pipeline ayant une armature précontrainte avant le durcissement du béton et constituée de câbles de matière plastique (6) ou de nattes de matière plastique (7), caractérisée en ce que, dans la (ou les) gaine en béton (11) est ou sont noyés un ou plusieurs tubes souples (10,10') en matière plastique pour des câbles ou des éléments analogues.

2. Procédé de fabrication d'une gaine en béton suivant la revendication 1, qui consiste à appliquer autour du tuyau formant pipeline (1) et supporté par des paliers d'appui (2), des câbles en matière plastique (6) et/ou des nattes en matière plastique (7), dont les extrémités qui passent dans des canaux ménagés dans les paliers d'appui (2) sont précontraintes, puis à coffrer et à bétonner le tronçon de tuyau armé, caractérisé en ce qu'il consiste à disposer et à incorporer au béton un ou plusieurs tubes souples (10,10') en matière plastique entre les paliers d'appui (2).

3. Procédé suivant la revendication 2, caractérisé en ce qu'il consiste à introduire le ou les tubes (10,10') en matière plastique dans des perçages (9) des paliers d'appui (2), et à remplir le ou les perçages (9) d'une masse de béton lors du bétonnage de la gaine en béton (11).

## Claims

1. A concrete jacketing or sheathing or the like (11) for pipelines having a reinforcement which is embodied by plastics cables (6) and/or plastics mats (7) and tensioned before hardening of the concrete, characterised in that one or more flexible plastics tubes (10,10') for cables or the like are embedded in the conrete sheathing (11).

2. A process for the preparation of a concrete jacketing or sheathing or the like according to claim 1, plastics cables (6) and/or plastics mats (7) being placed around the pipeline tube (1) supported on shell-like supports (2), those ends of such cables or mats which extend through channels in the supports (2) being prestressed, whereafter the reinforced tube portion is shuttered and concreted, characterised in that one or more flexible plastics tubes (10,10') is or are disposed and concreted in between the supports (2).

3. A process according to claim 2, characterised in that the or each plastics tube (10,10') is introduced into recesses (9) in the supports (2) and the or each recess (9) is filled with concrete during the concreting of the jacketing or sheathing or the like (11).

0 133 855

1/1

FIG.1

FIG.2

FIG.3

FIG.4

FIG.5